Europäisches Patentamt

European Patent Office

Office européen des brevets

(19)

(11) Publication number: **0 010 293**
**B1**

(12) **EUROPEAN PATENT SPECIFICATION**

(45) Date of publication of patent specification: **19.09.84**

(21) Application number: **79103998.5**

(22) Date of filing: **16.10.79**

(51) Int. Cl.³: **C 09 K 3/10,** C 09 D 5/34, C 08 L 27/00

(54) Improvements to pipe jointing compounds.

(30) Priority: **17.10.78 AU 6405/78**

(43) Date of publication of application:
**30.04.80 Bulletin 80/09**

(45) Publication of the grant of the patent:
**19.09.84 Bulletin 84/38**

(84) Designated Contracting States:
**AT BE CH DE FR GB IT LU NL SE**

(56) References cited:
**DE-A-2 116 846**
**US-A-1 907 231**
**US-A-4 028 324**

**The file contains technical information
submitted after the application was filed and
not included in this specification**

(73) Proprietor: **UNASCO Pty. Limited**
**1 Amax Avenue**
**Girraween New South Wales, 2145 (AU)**

(72) Inventor: **Bentley, Herbert William**
**1 Amax Avenue**
**Girraween, New South Wales 2145 (AU)**

(74) Representative: **Baillie, Iain Cameron et al**
**c/o Ladas & Parry Isartorplatz 5**
**D-8000 München 2 (DE)**

Courier Press, Leamington Spa, England.

## Description

The present invention relates to compositions particularly useful as thread sealants or pipe jointing compounds.

Commonly, Teflon (registed trade mark) tape is applied to threaded connections to aid sealing. However, difficulties encountered with application of the tape, plugging lines and "balling up" of the tape are disadvantages which were sought to be overcome by the use of pipe jointing compounds containing powdered polytetrafluoroethylene (PTFE) resins or other such powders suitably dispersed in a liquid carrier. However, such compounds have been found to be unsuitable as sealants at fairly low pressure on water fittings.

The following are representative of the prior art:

US—A—4 028 324 discloses a sealing composition for use in fuel cells at elevated temperatures. It comprises fibrillating polytetrafluoroethylene powder, a halogenated oil and a filler such as non-fibrillating polytetrafluoroethylene, silicon carbide or graphite.

DE—A—2 116 846 discloses a sealing composition comprising fibres of such materials as newspaper, wood fibres, carbonized rayon fibres, carbonized kraft paper, asbestos, glass wool or mineral wool. A filler such as calcium carbonate or talc, and an oily carrier, such as a mixture of alkyd resins and a non-drying oil.

It is an object of the present invention to substantially ameliorate such problems by providing an improved composition, in paste form, suitable for use as a pipe joining compound which contains synthetic fibres in admixture with a suitable carrier.

In a preferred embodiment of the invention the compositions suitable for use as pipe jointing compounds comprise Teflon, polypropylene or polyethylene fibres in admixture with a suitable carrier.

In another preferred embodiment of the invention these compositions also contain PTFE powder.

A particularly advantageous result has been achieved with the use of polyethylene fibres due to their tendency to expand, once in the joint, and further enhance the sealant properties of the composition.

In a preferred form of the invention the compositions comprise a filler, such as talc or clay, fibres selected from PTFE, FEP (fluorinated ethylene propylene resins) polyolefin or mixtures of one or more thereof in admixture with a liquid diluent, such as castor oil, blown castor oil, alkyd varnish, silicon oil, long oil, phenolics or other synthetic base oils. Such compositions preferably also contain Teflon powder and a pigment such as titanium dioxide.

In a more preferred form of the invention, the compositions comprise:

from 20—50% by weight of a filler, such as talc or clay;

from 5—15% by weight of the synthetic fibres, preferably Teflon, polyethylene or polypropylene fibres;

from 20—45% by weight of a liquid diluent such as castor oil (blown castor oil, alkyd varnish) silicon oil, long oil, phenolics or other synthetic base oils;

from 0—30% by weight of PTFE powder.

If desired, these compositions may also contain pigment material such as titanium dioxide in an amount of 0% to 7%, preferably 2.5% by weight.

The following examples serve to further illustrate but do not limit the present invention.

Example 1

The following ingredients were admixed together and yielded a composition exhibiting very good joint sealant properties. It was found to give a satisfactory seal on undamaged or damaged threads.

6 lbs (2.7 kg) of talc

4 lbs (1.8 kg) of PTFE powder

$\frac{1}{2}$ lb (0.23 kg) of titanium dioxide

$\frac{3}{4}$ gallon (3.4 l) of castor oil

2 lbs (0.91 kg) of Teflon fibre

The following compositions were found to exhibit similar properties. All percentages are expressed as % by weight.

Example 2

| | |
|---|---|
| Talc | 45% |
| $TiO_2$ | 3% |
| Castor Oil | 40% |
| Teflon fibre | 12% |

Example 3

| | |
|---|---|
| Talc | 35 % |
| PTFE powder | 15 % |
| $TiO_2$ | 2.5% |
| Blown castor oil | 37.5% |
| Polyethylene fibres | 10 % |

Example 4

| | |
|---|---|
| Clay | 47% |
| $TiO_2$ | 3% |
| Polyethylene fibres | 14% |
| Castor oil | 36% |

## Claims

1. A pipe jointing composition comprising synthetic fibres selected from polytetrafluoroethylene, fluorinated ethylene/propylene polymer, polyolefins and mixtures of such fibres in admixture with a suitable carrier.

2. The composition of claim 1 wherein said fibres are selected from polytetrafluoroethylene, fluorinated ethylene/propylene and polyethylene.

3. The composition as claimed in claim 1 or 2 further comprising PTFE powder.

4. A pipe jointing composition comprising:

   (i)  from 20 to 50% by weight of a filler;
  (ii)  from 20 to 45% by weight of a liquid diluent;
 (iii)  from 5 to 15% by weight of synthetic fibres selected from polytetrafluoroethylene, fluorinated ethylene/propylene polymer, polyolefins and mixtures of such fibres;
 (iv)  from 0 to 30% by weight of PTFE powder.

5. The composition as claimed in claim 4 wherein the fibres are selected from PTFE, FEP, polyethylene or polypropylene fibres and mixtures of such fibres.

6. The composition as claimed in claim 4 or 5 wherein said liquid diluent is selected from castor oil, blown castor oil, silicon oil, alkyd varnish, long oil phenolic and other synthetic base oils.

7. A composition as claimed in claims 4, 5 or 6 wherein said filler is talc.

8. A composition suitable for use as a pipe jointing compound comprising:

   (i)  from 20 to 50% by weight of a filler selected from talc or clay;
  (ii)  from 0 to 30% by weight of PTFE powder;
 (iii)  from 0 to 7% by weight of pigment material;
 (iv)  from 30 to 40% by weight of a liquid diluent selected from castor oil, silicon oil, alkyd varnish, long oil phenolics, and other synthetic base oils; and
  (v)  from 5 to 15% by weight of a synthetic fibre selected from PTFE fibres, FEP fibres, polyethylene fibres and polypropylene fibres.

## Patentansprüche

1. Dichtmasse für Rohrverbindungen mit Synthesefasern, die ausgewählt sind aus Polytetrafluoräthylen, fluoriertem Ethylen/Propylen-Polymer, Polyolefinen und Gemischen derartiger Fasern im Germisch mit einem geeigneten Dispersionsmittel.

2. Zusammensetzung nach Anspruch 1, dadurch gekennzeichnet, daß die Fasern ausgewält, sind aus Polytetrafluorethylen, fluoriertem Ethylene/Propylen und Polyethylen.

3. Zusammensetzung nach Anspruch 1 oder 2, dadurch gekennzeichnet, daß sie zusätzlich PTFE-Pulver enthält.

4. Dichtmasse für Rohrverbindungen, gekennzeichnet durch:

   (i)  20 bis 50 Gew.% eines Füllstoffs;
  (ii)  20 bis 45 Gew.% eines flüssigen Verdünnungsmittels;
 (iii)  5 bis 15 Gew.% Synthesefasern, die ausgewählt sind aus Polytetrafluorethylen, fluoriertem Ethylen/Propylen-Polymer, Polyolefinen und Gemischen derartiger Fasern;
 (iv)  0 bis 30 Gew.% eines PTFE-Pulvers.

5. Zusammensetzung nach Anspruch 4, dadurch gekennzeichnet, daß die Fasern ausgewählt sind aus PTFE-, FEP-, Polyethylen- oder Polypropylenfasern und den Gemischen derartiger Fasern.

6. Zusammensetzung nach Anspruch 4 oder 5, dadurch gekennzeichnet, daß das flüssige Verdünnungsmittel ausgewählt is aus Rizinusöl, geblasenem Rizinusöl, Silikonöl, ölreichen Phenolharzen und anderen Syntheseoölen.

7. Zusammensetzung nach Anspruch 4, 5 oder 6, dadurch gekennzeichnet, daß der Füllstoff Talkum ist.

8. Für die Verwendung als Dichtmasse für Rohrverbindungen geeignete Zusammensetzung, gekennzeichnet durch:

   (i)  20 bis 50 Gew.% eines Füllstoffs, der ausgewählt ist aus Talkum und Ton;
  (ii)  0 bis 30 Gew.% PTFE-Pulver;
 (iii)  0 bis 7 Gew.% Pigmentsubstanz;
 (iv)  30 bis 40 Gew.% eines flüssigen Verdünnungsmittels, das ausgewählt ist aus Rizinusöl, Silikonöl, Alkyd-harz, ölreichen Phenolharzen und anderen Syntheseölen; und
  (v)  5 bis 15 Gew.% Synthesefasern, die ausgewählt sind aus den PTFE-Fasern, FEP-Fasern, Polyethylenfasern und Polypropylenfasern.

## Revendications

1. Une composition de joint pour tuyaux comprenant des fibres synthétiques choisies parmi des fibres de polytétrafluoroéthylène, de polymère éthylène/propylène fluoré, de polyoléfines et des mélanges de telles fibres en mélange avec un véhicule approprié.

2. Une composition selon la revendication 1, dans laquelle les fibres sont choisies parmi des fibres de polytétrafluoroéthylène, de polymère éthylène/propylène fluoré et de polyéthylène.

3. Une composition selon la revendication 1 ou 2, comprenant en outre de la poudre de PTFE.

4. Une composition de joint pour tuyaux comprenant:

(i) de 20 à 50% en poids d'une charge;
(ii) de 20 à 45% en poids d'un diluant liquide;
(iii) de 5 à 15% en poids de fibres synthétiques choisies parmi des fibres de polytétrafluoroéthylène, de polymère éthylène/propylène fluoré, de polyoléfines et des mélanges de telles fibres;
(iv) de 0 à 30% en poids de poudre de PTFE.

5. Une composition selon la revendication 4, dans laquelle les fibres sont choisies parmi des fibres de PTFE, de FEP, de polyéthylène ou de polypropylène et des mélanges de telles fibres.

6. Une composition selon la revendication 4 ou 5, dans laquelle le diluant liquide est choisi parmi l'huile de ricin, l'huile de ricin soufflée, une huile de silicone, un vernis alkyd, une résine phénolique de haute teneur en huile ou d'autres huiles de base synthétiques.

7. Une composition selon la revendication 4, 5 ou 6 dans laquelle la charge eut du talc.

8. Une composition utilisable comme produit pour la jonction de tuyaux comprenant:

(i) de 20 à 50% en poids d'une charge choisie parmi le talc ou l'argile;
(ii) de 0 à 30% en poids de poudre de PTFE;
(iii) de 0 à 7% en poids d'un pigment;
(iv) de 30 à 40% en poids d'un diluant liquide choisi parmi l'huile de ricin, une huile de silicone, un vernis alkyd, des résines phénoliques d'une haute teneur en huile et d'autres huiles de base synthétiques; et
(v) de 5 à 15% en poids d'une fibre synthétique choisie parmi des fibres de PTFE, des fibres de FEP, des fibres de polyéthylène et des fibres de polypropylène.